# EUROPEAN PATENT APPLICATION

(11) **EP 4 567 200 A1**
(43) Date of publication of application: **11.06.2025**
(21) Application number: 24744705.5
(22) Date of filing: 18.01.2024
(51) Int. Cl.: E02F 9/16

(54) **CONSTRUCTION MACHINE**

(30) Priority: 20.01.2023 JP 2023007518
(71) Applicant: Hitachi Construction Machinery Co., Ltd., Tokyo 110-0015 (JP)
(72) Inventor: SAWAYAMA Chiaki, Tsuchiura-shi, Ibaraki 300-0013 (JP); ANAHARA Keiichirou, Tsuchiura-shi, Ibaraki 300-0013 (JP); HAGIWARA Naoki, Tsuchiura-shi, Ibaraki 300-0013 (JP)
(74) Representative: Manitz Finsterwald Patent- und Rechtsanwaltspartnerschaft mbB
(86) International application number: PCT/JP2024/001311
(87) International publication number: WO 2024/154785

(57) **Abstract**

An object of the present invention is to provide a construction machine that allows installation of a controller without obstructing the field of view of an on-board operator and that makes it possible to reduce time required for maintenance of the controller. To achieve this, there is provided a hydraulic excavator including a machine body including a work device, a cab provided in the machine body, an operation device provided in the cab to operate the work device, a ceiling cover that covers at least a portion of a ceiling in the cab from below, and a first controller that controls the work device during remote operation or automatic operation. The first controller includes a reset button for restarting, and is disposed between the ceiling and the ceiling cover with the reset button facing downward, and the ceiling cover is fitted at such a position as to cover the first controller from below, and includes an opening portion that causes the reset button to be exposed to an inside of the cab.

## Description

### Technical Field

The present invention relates to a construction machine, such as a hydraulic excavator.

### Background Art

The technique of attaching a sensor to a machine body for sensing of a situation of surroundings of the machine body is used in a construction machine (Patent Document 1). Meanwhile, in recent years, for the purpose of enabling operation even in a situation where entry of an operator is restricted, such as in a disaster site, there has been an increasing need for unmanned operation that allows operation by remote operation or an autopilot without an operator being on board the machine body. Here, in a construction machine capable of unmanned operation, desired functions vary depending on the contents of operation, an environment of usage, etc., and thus, a controller having high expandability and allowing addition of and change in components, such as sensors, and software is used to meet a demand for a change in or adjustment of functionality. Further, replacement or maintenance (e.g., reprogramming of software, restarting, etc.) of the controller is performed with high frequency. In addition, in a case where the construction machine is configured to be capable of not only the unmanned operation but also manned operation achieved by operation by an on-board operator, the controller needs to be disposed in such a manner as not to obstruct the field of view of the on-board operator.

Patent Document 1 discloses a work vehicle provided with an electronic device (controller) that processes imaging data acquired by each of a first stereo camera and a second stereo camera, in which the electronic device is positioned in an inside of a cab and is attached to a ceiling of the cab, and a lower side of the electronic device is covered with an interior material cover.

### Prior Art Document

### Patent Document

Patent Document 1: Japanese Patent No. 6831799

### Summary of the Invention

### Problem to be Solved by the Invention

However, in the work vehicle described in Patent Document 1, it is necessary to remove the interior material cover provided at the ceiling of the cab, when performing maintenance of the controller. In a case where a structure for protecting the controller disclosed in Patent Document 1 is applied to a construction machine capable of unmanned operation, a large amount of time will be required for maintenance work because maintenance of a controller having high expandability is performed with high frequency.

The present invention has been conceived of in view of the above problem, and an object thereof is to provide a construction machine that allows a controller to be installed therein without obstructing the field of view of an on-board operator and that is able to reduce time required for maintenance of the controller.

### Means for Solving the Problem

To achieve the above object, the present invention is directed to a construction machine including a machine body including a work device, a cab provided in the machine body, an operation device provided in the cab to operate the work device, a ceiling cover that covers at least a portion of a ceiling in the cab from below, and a first controller that controls the work device during remote operation or automatic operation, in which the first controller includes a reset button for restarting, and is disposed between the ceiling and the ceiling cover with the reset button facing downward, and the ceiling cover is fitted at such a position as to cover the first controller from below, and includes an opening portion that causes the reset button to be exposed to an inside of the cab.

### Advantages of the Invention

The present invention enables installation of a controller without obstructing the field of view of an on-board operator, and makes it possible to reduce time required for maintenance of the controller.

### Brief Description of the Drawings

FIG. 1 is a side view of a hydraulic excavator.
FIG. 2 is a perspective view of an inside of a cab.
FIG. 3 is a side sectional view of the cab.
FIG. 4 is a side sectional view of a part in the vicinity of a ceiling of the cab.
FIG. 5 is a bottom view of the ceiling.
FIG. 6 is a bottom view of the ceiling with a left cover removed.
FIG. 7 is a bottom view of the ceiling with the left cover and a right cover removed.
FIG. 8 is a bottom view of the ceiling with the left cover, the right cover, and a rear cover removed.
FIG. 9 is a bottom view of the ceiling with a connector cover removed.

### Mode for Carrying Out the Invention

Hereinafter, an embodiment of the present invention will be described with reference to the accompanying drawings. In the drawings, same elements are designated by same reference characters, and redundant description will be omitted as appropriate. In the description of the present embodiment, a hydraulic excavator will be described as an example of a construction machine according to the present invention, but the present invention is also applicable to other construction machines, such as a dump truck, a bulldozer, and a wheel loader.

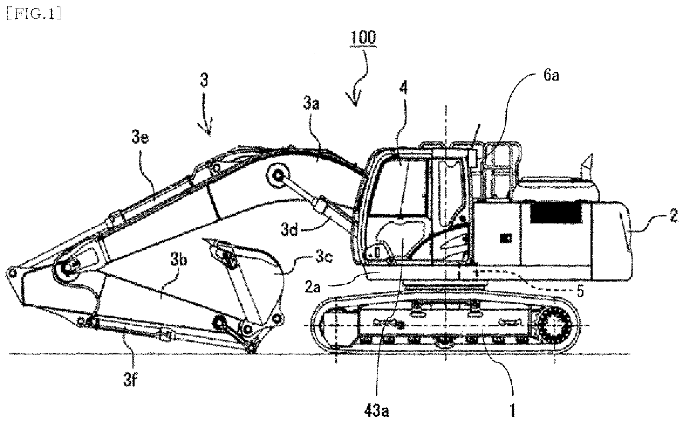

FIG. 1 is a side view of the hydraulic excavator. In FIG. 1, a hydraulic excavator 100 includes a crawler-type lower track structure 1, an upper swing structure 2 provided on the lower track structure 1 in such a manner as to be swingable, and a front work implement 3 provided on a front side of the upper swing structure 2 in such a manner as to be rotatable in an up-down direction. The lower track structure 1, the upper swing structure 2, and the front work implement 3 (work device) together form a machine body of the hydraulic excavator 100.

The front work implement 3 includes a plurality of to-be-driven members (a boom 3a, an arm 3b, and a bucket 3c), each of which is capable of rotating in a vertical direction, coupled to one another. A proximal end of the boom 3a is rotatably supported by a front portion of the upper swing structure 2. One end of the arm 3b is rotatably coupled to a distal end of the boom 3a, while the bucket 3c is rotatably coupled to another end (distal end) of the arm 3b. The boom 3a, the arm 3b, and the bucket 3c are driven by a boom cylinder 3d, an arm cylinder 3e, and a bucket cylinder 3f, respectively, which are hydraulic actuators.

The upper swing structure 2 includes a swing frame 2a as a base portion and other members disposed thereon, and the swing frame 2a is driven by a hydraulic swing motor 5, which is a hydraulic actuator, to swing with respect to the lower track structure 1, whereby the upper swing structure 2 swings with respect to the lower track structure 1. A cab 4 for an operator to board to operate the hydraulic excavator 100 is disposed at the front portion of the upper swing structure 2. The upper swing structure 2 has installed therein other members, such as an engine as a prime mover, a hydraulic pump and a pilot pump that are driven by the engine, and a control valve that controls the flow (a direction and a flow rate) of a hydraulic operating fluid supplied from the hydraulic pump to each of the hydraulic actuators (the boom cylinder 3d, the arm cylinder 3e, the bucket cylinder 3f, the hydraulic swing motor 5, etc.).

An antenna 6a is attached to an upper rear of the cab 4. The antenna 6a receives a radio wave (operation signal) transmitted from a transmitter (not depicted) of a wireless operation device at a remote location. In the present embodiment, the hydraulic excavator 100 is boardable and capable of being remotely operated, and can be operated by a remote operator as well as by an operator (on-board operator) on board the cab 4.

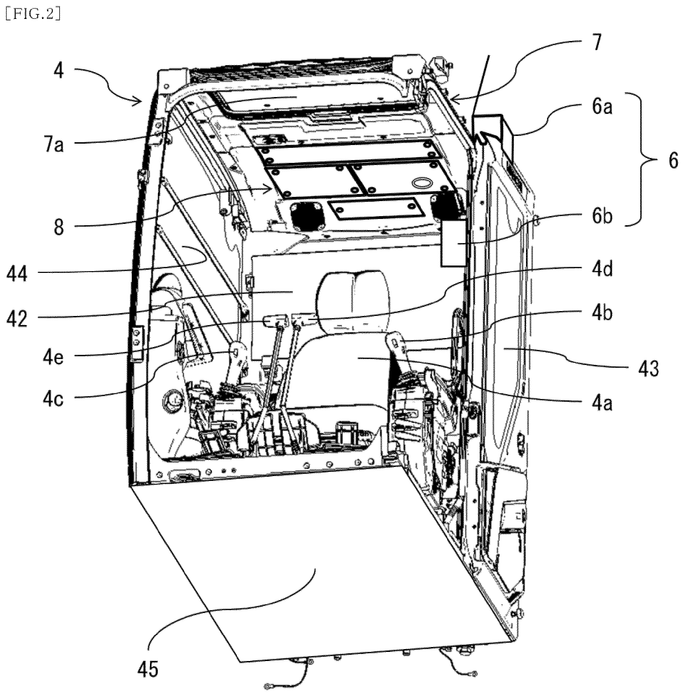

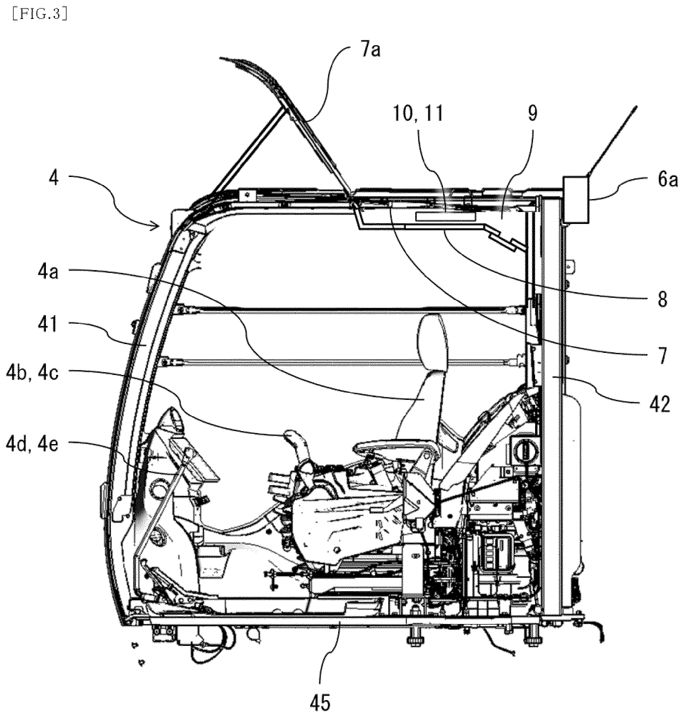

FIG. 2 is a perspective view of an inside of the cab 4. The cab 4 includes a front surface portion 41 (depicted in FIG. 3), a rear surface portion 42, a left side portion 43, a right side portion 44, a ceiling 7 as an upper surface portion, and a bottom surface portion 45. The left side portion 43 of the cab 4 includes an entry/exit opening formed therein, and a door 43a (depicted in FIG. 1) capable of being opened and closed is provided in the entry/exit opening. Each of the front surface portion 41, the rear surface portion 42, the left side portion 43, and the right side portion 44 is partially paned to enable the on-board operator to recognize a situation of surroundings of the machine body. A seat 4a in which the on-board operator is to sit, operation levers 4b to 4e for driving operation of the front work implement 3, swinging operation of the upper swing structure 2, and travelling operation of the lower track structure 1, and so on are disposed in the cab 4. A remote communication receiver 6b is attached to a left side surface in the cab 4. The remote communication receiver 6b transmits an operation signal received by the antenna 6a to a first controller 10, which will be described below. The antenna 6a and the remote communication receiver 6b together form a remote communication device 6. A forward portion of the ceiling 7 of the cab 4 forms an overhead window 7a capable of being opened and closed. A portion of the ceiling 7 rearward of the overhead window 7a is covered with a ceiling cover 8.

FIG. 3 is a side sectional view of the cab 4. The first controller 10 and a second controller 11 are disposed in a ceiling space 9 defined between the ceiling 7 and the ceiling cover 8. The controllers 10 and 11 in the present embodiment have functions that enable remote operation or automatic operation of the hydraulic excavator 100. The first controller 10 determines an operation of the machine body on the basis of information acquired from various types of sensors and the remote communication device 6 connected thereto for functionality expansion. The second controller 11 generates signals (operation commands) for causing the machine body to perform the operation of the machine body determined by the first controller 10, and outputs the generated signals to components (the hydraulic pump, a solenoid valve, and a monitor) installed in the machine body. Note that the second controller 11 may alternatively output the operation commands through a controller (not depicted) that is installed in a conventional standard machine, instead of outputting the operation commands directly to the installed components. The controllers 10 and 11 are positioned on a rear side in the cab 4, away from the overhead window 7a, and thus do not hinder opening and closing of the overhead window 7a. In addition, the controllers 10 and 11 are not exposed to rainwater even when a rainfall occurs with the overhead window 7a being open.

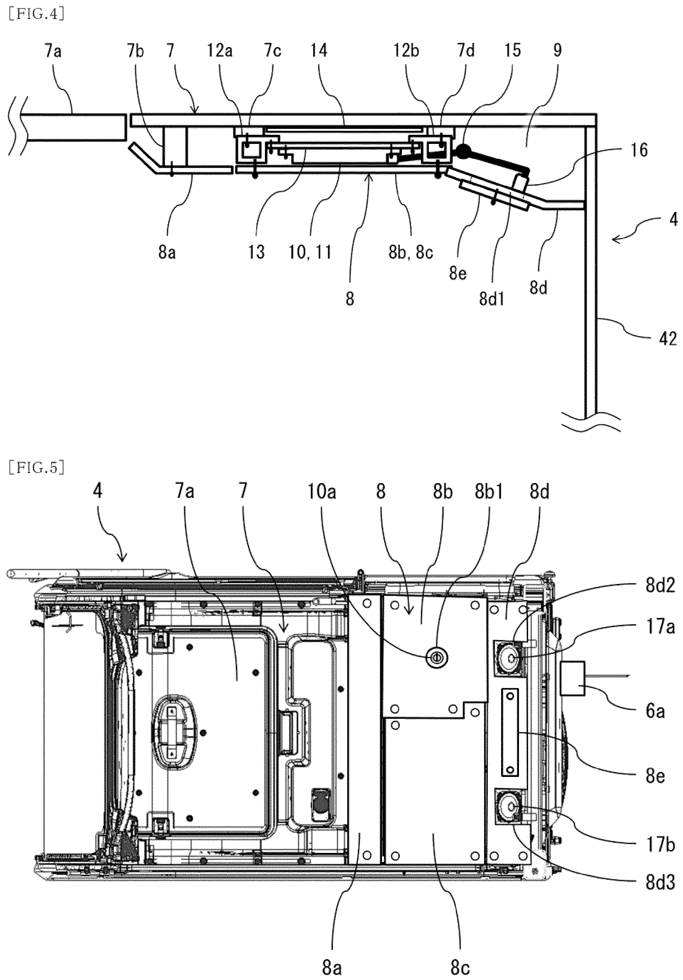

FIG. 4 is a side sectional view of a part in the vicinity of the ceiling 7 of the cab 4. The ceiling cover 8, which covers a rear portion of the ceiling 7, includes a front cover 8a that covers a part behind the overhead window 7a, a left cover 8b that covers a left-hand part behind the front cover 8a, a right cover 8c that covers a right-hand part behind the front cover 8a, a rear cover 8d that covers a part behind the left cover 8b and the right cover 8c, and a connector cover 8e that closes an opening portion 8d1 of the rear cover 8d.

Seat portions 7b, 7c, and 7d are welded to a lower surface of the ceiling 7. The front cover 8a is fitted to the seat portion 7b. Brackets 12a and 12b are fitted to the seat portions 7c and 7d. A mounting base 13 is fitted to the brackets 12a and 12b, and the controllers 10 and 11 are fitted to the mounting base 13. Urethane 14 for heat insulation is fitted to the ceiling 7 between the seat portion 7c and the seat portion 7d to protect the controllers 10 and 11 against heat of sunlight. The covers 8b and 8c are fitted to the brackets 12a and 12b.

The controllers 10 and 11 are connected to the antenna 6a and the remote communication receiver 6b through a harness 15. A reduction in length of the harness 15 can be achieved by the controllers 10 and 11 being disposed in the ceiling space 9, which is positioned in the vicinity of the antenna 6a and the remote communication receiver 6b. This makes it possible to reduce influence of disturbance noise and the risk of a broken wire. The harness 15 has connectors 16 for expansion equipment to be connected to the controller 10 or 11. Examples of the expansion equipment include an input device designed for acquiring operation information, machine body information, or surroundings information, an output device designed for notification of the situation of the machine body or for ensuring an environment suited to unmanned operation, and so on. Specific examples of the input devices include a communication device (receiver) and sensors (a camera (imaging device), a LiDER, etc.). Specific examples of the output devices include an LED (a working light, a warning light), a display device, and an actuator (a servomotor, a solenoid valve). Such an actuator is used, for example, to adjust the orientation of a sensor or an LED, or adjust the direction of a camera in accordance with an instruction from a remote operator. The rear cover 8d includes the opening portion 8d1, which causes the connectors 16 to be exposed to the inside of the cab 4. The connector cover 8e is fitted to the rear cover 8d in such a manner as to close the opening portion 8d1. The covers 8a to 8e have structures that can be fixed by simple means, such as hooks, pins, or bolts, and can easily be removed by hand.

FIG. 5 is a bottom view of the ceiling 7. The left cover 8b has a contour that matches the size of a casing of the first controller 10, and the right cover 8c has a contour that matches the size of a casing of the second controller 11. When replacement or maintenance (e.g., reprogramming of software) of only one of the controllers is performed, it is sufficient if only the corresponding cover is removed. Reprogramming of software of the controller 10 or/and the controller 11 is performed with a dedicated cable/cables connected to the controller 10 or/and the controller 11 exposed to the inside of the cab 4. Thus, the replacement or maintenance of the controller 10 or/and the controller 11 can be accomplished in a short period of time. The left cover 8b includes an opening portion 8b1 which causes a reset button 10a of the first controller 10 to be exposed to the inside of the cab 4. This makes it possible to restart the first controller 10 without removing the left cover 8b. The rear cover 8d includes opening portions 8d2 and 8d3 which cause speakers 17a and 17b fitted to the vicinity of a rear end of the ceiling 7 to be exposed to the inside of the cab 4.

Examples of cases where the first controller 10 needs to be restarted include (1) a case where the software of the first controller 10 has been changed (reprogrammed), (2) a case where expansion equipment has been newly added (to enable the first controller 10 to recognize the state of input from the expansion equipment for proper processing), and (3) a case where an abnormality has been recognized in behavior of the first controller 10 (to cause the first controller 10 to recover from an error condition). In particular, in the above case (3), it is not necessary to remove the left cover 8b, and the ability to press the reset button 10a through the opening portion 8b1 provides a great advantage. Meanwhile, in the above case (1) or (2), work is performed with the left cover 8b removed, but in a case where the left cover 8b has been fitted again without the reset button 10a being pressed after the work has been performed, it is possible to press the reset button 10a without removing the left cover 8b again, which leads to preventing an increase in the number of maintenance steps.

The reset button 10a is disposed at a position that is rearward of an imaginary line that extends vertically upward from a headrest when a backrest of the seat 4a is in a posture adjusted for the operator to operate the machine body, that is forward of the speakers 17a and 17b in a front-rear direction of the machine body, and that is offset toward a cab door (to the left side in the present embodiment) from a middle of the inside of the cab 4 in a width direction. This contributes to preventing a head of an operator from touching the reset button 10a to cause an erroneous operation thereof at the time of getting on or off, and leads to improved operability of the reset button 10a when compared to a case where the reset button 10a is disposed, for example, at a rear right corner in the cab 4.

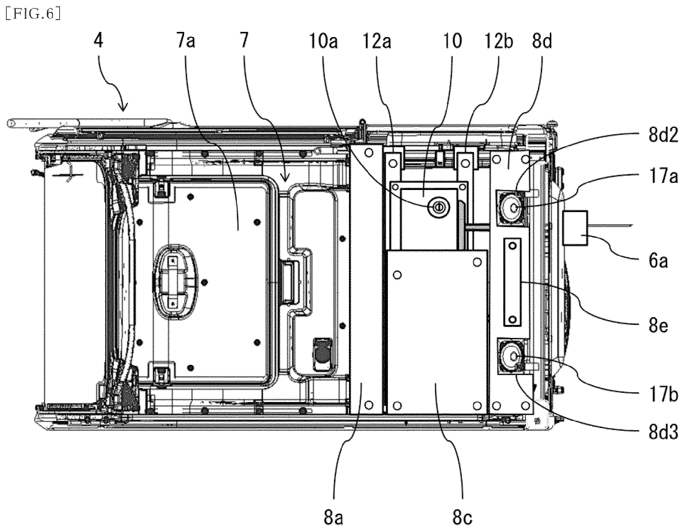

FIG. 6 is a bottom view of the ceiling 7 with the left cover 8b (depicted in FIG. 5) removed. The first controller 10 can be exposed to the inside of the cab 4 by only the left cover 8b being removed. Thus, the replacement or maintenance of the first controller 10 can be accomplished in a short period of time. In addition, when the replacement or maintenance of the first controller 10 is performed with the left cover 8b removed, the second controller 11 can be protected by the second cover 8c.

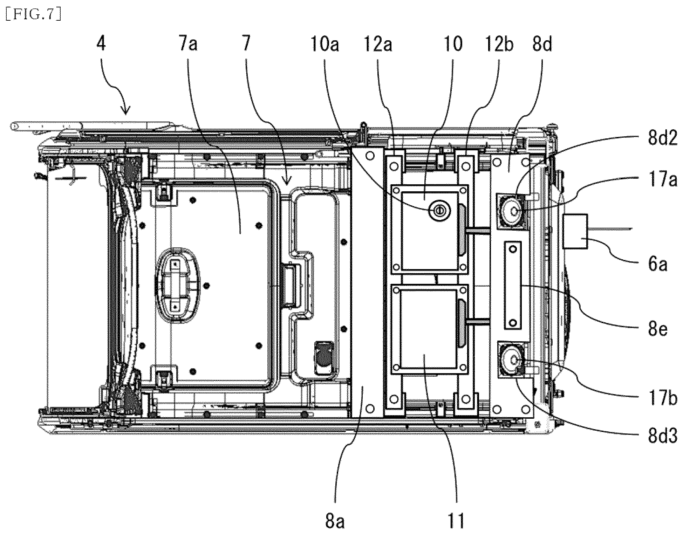

FIG. 7 is a bottom view of the ceiling 7 with the left cover 8b and the right cover 8c (depicted in FIG. 5) removed. The second controller 11 can be exposed to the inside of the cab 4 by the right cover 8c being removed. This makes it possible to perform replacement or maintenance of the second controller 11. Note that, because a left end portion of the right cover 8c is covered by a right end portion of the left cover 8b as illustrated in FIG. 5, the right cover 8c cannot be removed unless the left cover 8b is removed first. This contributes to avoiding a mistaken removal of the second controller 11, which requires less frequent maintenance.

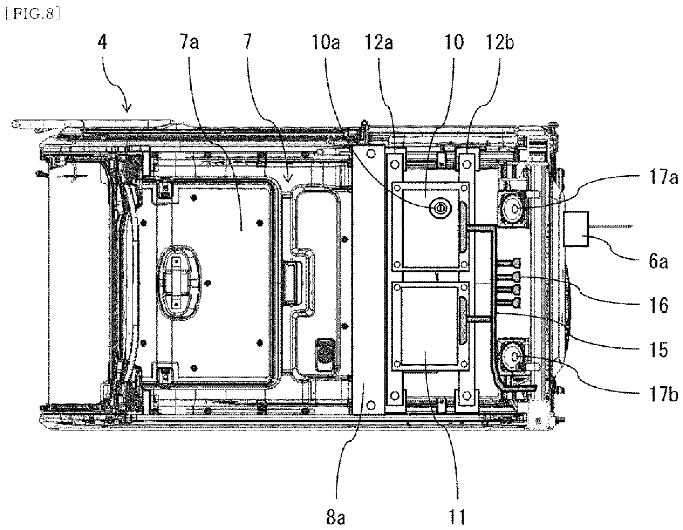

FIG. 8 is a bottom view of the ceiling 7 with the left cover 8b, the right cover 8c, and the rear cover 8d (depicted in FIG. 5) removed. The first controller 10 and the second controller 11 are connected to the antenna 6a and the remote communication receiver 6b through the harness 15. The harness 15 has the connectors 16 for connecting expansion equipment to the first controller 10 or the second controller 11.

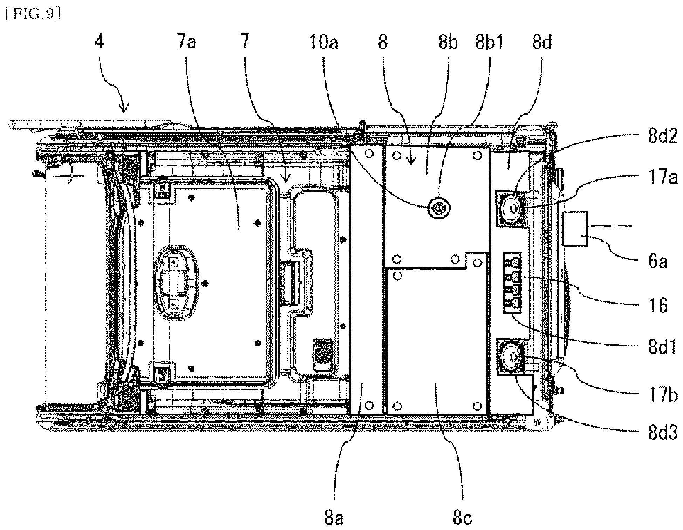

FIG. 9 is a bottom view of the ceiling 7 with the connector cover 8e (depicted in FIG. 5) removed. The connectors 16 can be exposed to the inside of the cab 4 by the connector cover 8e being removed from the rear cover 8d of the ceiling cover 8. This makes it possible to easily connect expansion equipment to the first controller 10 or the second controller 11.

### (Summary)

In the present embodiment, the hydraulic excavator 100 includes the machine body 1, 2, 3 including the work device 3, the cab 4 provided in the machine body 1, 2, 3, the operation device provided in the cab 4 to operate the work device 3, the ceiling cover 8 that covers at least a portion of the ceiling in the cab 4 from below, and the first controller 10 that controls the work device 3 during remote operation or automatic operation. The first controller 10 includes the reset button 10a for restarting, and is disposed between the ceiling 7 and the ceiling cover 8 with the reset button 10a facing downward, and the ceiling cover 8 is fitted at such a position as to cover the first controller 10 from below, and includes the opening portion 8b1 that causes the reset button 10a to be exposed to the inside of the cab 4.

According to the present embodiment having the above configuration, the first controller 10 is disposed between the ceiling 7 and the ceiling cover 8 in the cab 4, allowing installation of the first controller 10 without obstructing the field of view of the on-board operator. Further, it is possible to restart the first controller 10 without removing the ceiling cover 8, by pressing the reset button 10a of the first controller 10 exposed to the inside of the cab 4 through the opening portion 8b1 of the ceiling cover 8, and it is also possible to cause the first controller 10 to be exposed to the inside of the cab 4 by removing only the first cover 8b, which makes it possible to accomplish replacement or maintenance of the first controller 10 in a short period of time. Moreover, the opening portion 8b1 is provided below the first controller 10, which prevents rainwater, a drink, water for cleaning, or the like from falling upon the first controller 10, even when the opening portion 8b1 remains open. In addition, an improvement in maintenance workability is achieved because cumbersome work such as attachment/removal of the ceiling cover 8 and opening/closing of the opening portion 8b1 can be reduced. Furthermore, the first controller 10 and the head of the on-board operator can be protected by the first cover 8b because the opening portion 8b1 is only locally provided.

Also, in the present embodiment, the hydraulic excavator 100 further includes the second controller 11 that is connected to the first controller 10 and that outputs, on the basis of a signal inputted from the first controller 10, a command to a component installed in the machine body 1, 2, 3. The second controller 11 is disposed between the ceiling 7 and the ceiling cover 8, the ceiling cover 8 includes a plurality of covers 8a to 8e capable of being removed separately, the first cover 8b among the plurality of covers 8a to 8e includes the opening portion 8b1, and is fitted at such a position as to cover the first controller 10 from below without overlapping with the second controller 11 in the up-down direction, and the second cover 8c among the plurality of covers 8a to 8e is fitted at such a position as to cover the second controller 11 from below. Thus, even when replacement or maintenance of the first controller 10 is performed with the first cover 8b removed, the second controller 11 can be protected by the second cover 8c.

Also, in the present embodiment, the hydraulic excavator 100 includes the harness 15 connected to the first controller 10. The first controller 10 is configured to be capable of changing functionality of the machine body 1, 2, 3, the harness 15 has the connector 16 for connecting expansion equipment to the first controller 10, and the third cover 8e among the plurality of covers 8a to 8e is fitted at such a position as to cover the connector 16 from below. Thus, the expansion equipment can be connected to the first controller 10 with only the third cover 8e removed.

Also, in the present embodiment, a forward portion of the ceiling 7 is the overhead window 7a capable of being opened and closed, and the first cover 8b is disposed rearward of the overhead window 7a. This allows installation of the first controller 10 and the second controller 11 without hindering opening/closing of the overhead window 7a. Further, even in a case where a rainfall occurs with the overhead window 7a being open, the first controller 10 and the second controller 11 are not exposed to rainwater, making it possible to prevent malfunctions of the first controller 10 and the second controller 11.

While the embodiment of the present invention has been described in detail above, the present invention is not limited to the embodiment described above, and encompasses a variety of modifications. For example, the above-described embodiment has been described in detail to clearly describe the present invention, and the present invention is not necessarily limited to embodiments that have all the features described above.

### Description of Reference Characters

1: Lower track structure (machine body)
2: Upper swing structure (machine body)
2a: Swing frame
3: Front work implement (work device, machine body)
3a: Boom
3b: Arm
3c: Bucket
3d: Boom cylinder
3e: Arm cylinder
3f: Bucket cylinder
4: Cab
4a: Seat
4b, 4c, 4d, 4e: Operation lever
5: Hydraulic swing motor
6: Remote communication device
6a: Antenna
6b: Remote communication receiver
7: Ceiling
7a: Overhead window
7b, 7c, 7d: Seat portion
8: Ceiling cover
8a: Front cover
8b: Left cover (first cover)
8b1: Opening portion
8c: Right cover (second cover)
8d: Rear cover
8d1, 8d2, 8d3: Opening portion
8e: Connector cover (third cover)
9: Ceiling space
10: First controller
10a: Reset button
11: Second controller
12a, 12b: Bracket
13: Mounting base
14: Urethane for heat insulation
15: Harness
16: Connector
17a, 17b: Speaker
100: Hydraulic excavator

## Claims

1. A construction machine comprising:
a machine body including a work device;
a cab provided in the machine body;
an operation device provided in the cab to operate the work device;
a ceiling cover that covers at least a portion of a ceiling in the cab from below; and
a first controller that controls the work device during remote operation or automatic operation, wherein
the first controller includes a reset button for restarting, and is disposed between the ceiling and the ceiling cover with the reset button facing downward, and
the ceiling cover is fitted at such a position as to cover the first controller from below, and includes an opening portion that causes the reset button to be exposed to an inside of the cab.

2. The construction machine according to claim 1, further comprising:
a second controller that is connected to the first controller and that outputs, on a basis of a signal inputted from the first controller, a command to a component installed in the machine body, wherein
the second controller is disposed between the ceiling and the ceiling cover,
the ceiling cover includes a plurality of covers capable of being removed separately,
a first cover among the plurality of covers includes the opening portion, and is fitted at such a position as to cover the first controller from below without overlapping with the second controller in an up-down direction, and
a second cover among the plurality of covers is fitted at such a position as to cover the second controller from below.

3. The construction machine according to claim 2, further comprising:
a harness connected to the first controller, wherein
the first controller is configured to be capable of changing functionality of the machine body,
the harness has a connector for connecting expansion equipment to the first controller, and
a third cover among the plurality of covers is fitted at such a position as to cover the connector from below.

4. The construction machine according to claim 1, wherein
a forward portion of the ceiling is an overhead window capable of being opened and closed, and
the ceiling cover is disposed rearward of the overhead window.
